(19) Europäisches Patentamt
European Patent Office
Office européen des brevets

(11) **EP 4 571 873 A1**

(12) **EUROPEAN PATENT APPLICATION**
published in accordance with Art. 153(4) EPC

(43) Date of publication:
**18.06.2025 Bulletin 2025/25**

(21) Application number: **24852421.7**

(22) Date of filing: **12.08.2024**

(51) International Patent Classification (IPC):
*H01M 4/131* (2010.01)   *H01M 4/525* (2010.01)
*H01M 4/505* (2010.01)   *H01M 10/0562* (2010.01)
*H01M 4/62* (2006.01)   *H01M 10/0585* (2010.01)
*H01M 10/052* (2010.01)   *H01M 4/02* (2006.01)

(52) Cooperative Patent Classification (CPC):
**H01M 4/02; H01M 4/131; H01M 4/505;
H01M 4/525; H01M 4/62; H01M 10/052;
H01M 10/0562; H01M 10/0585;** Y02E 60/10

(86) International application number:
**PCT/KR2024/011956**

(87) International publication number:
**WO 2025/034068 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.08.2023   KR 20230104628
31.10.2023   KR 20230147408**

(71) Applicant: **LG Energy Solution, Ltd.
Seoul 07335 (KR)**

(72) Inventors:
• **OH, Kyungbae
Daejeon 34122 (KR)**

• **KWON, Hyejin
Daejeon 34122 (KR)**
• **KIM, Myeongsoo
Daejeon 34122 (KR)**
• **KIM, Sohee
Daejeon 34122 (KR)**
• **LEE, Choonghyeon
Daejeon 34122 (KR)**
• **CHOI, Seokin
Daejeon 34122 (KR)**
• **KANG, Sora
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **CATHODE FOR ALL-SOLID-STATE BATTERY, AND ALL-SOLID-STATE BATTERY COMPRISING SAME**

(57) The present invention relates to a cathode for an all-solid-state battery, and an all-solid-state battery comprising same. More specifically, the present invention exhibits physical properties in which the ratio of electronic conductivity to ionic conductivity of a cathode active material layer included in a cathode is in the range of 0.5 to 1.5, and thus an all-solid-state battery including the cathode can have improved battery performance such as that for lifespan characteristics and high-rate characteristics.

[FIG. 1]

**Description**

[Technical Field]

The present application claims the priority from Korean Patent Application No. 10-2023-0104628, filed Aug. 10, 2023, Korean Patent Application No. 10-2023-0147408, filed Oct. 31, 2023, and Korean Patent Application No. 10-2024-0107332, filed Aug. 12, 2024.

The present disclosure relates to a positive electrode for an all-solid-state battery and an all-solid-state battery comprising the same.

[Background Art]

A variety of batteries are being investigated to overcome the limitations of current lithium secondary batteries in terms of capacity, safety, power, size, and miniaturization.

As representative examples, compared to lithium-ion secondary batteries, continuous research is being conducted in academia and industry on metal-air batteries that have a very large theoretical capacity in terms of capacity, all-solid-state batteries that have no risk of explosion in terms of safety, supercapacitors in terms of output, NaS batteries or redox flow batteries (RFB) in terms of large-scale, and thin film batteries in terms of miniaturization.

An all-solid-state battery is a battery in which the liquid electrolyte used in conventional lithium secondary batteries is replaced with a solid electrolyte, and since no flammable solvent is used in the battery, there is no ignition or explosion caused by the decomposition reaction of the conventional electrolyte, safety can be greatly improved. In addition, among all-solid-state batteries, technology development is continuing for sulfide-based all-solid-state batteries, which have a high ionic conductivity of solid electrolyte and can realize a high energy density of over 900 Wh/L in theory. The term "sulfide-based all-solid-state battery" refers to an all-solid-state battery containing a sulfide-based solid electrolyte.

In all-solid-state battery systems, lithium-ion conduction through the liquid electrolyte present in conventional lithium-ion batteries (LIBs) does not occur. Therefore, when manufacturing positive electrodes for sulfide-based all-solid-state batteries, fine sulfide-based solid electrolyte particles should be added within the positive electrode to increase the contact interface between the positive electrode active material and the sulfide-based solid electrolyte particles, in order to increase the ionic conductivity of lithium ions.

Additionally, in the positive electrode of sulfide-based all-solid-state batteries, conductive materials are added to form electronic conduction paths to enhance the electronic conductivity.

However, when high contents of positive electrode active materials are included in the positive electrode of sulfide-based all-solid-state batteries to enhance the energy density, the amount of sulfide-based solid electrolyte and conductive materials included may not be sufficient to secure both ionic conductivity and electronic conductivity, which can degrade the high-rate characteristics and life characteristics.

Therefore, technology development is required to enable the positive electrode of sulfide-based all-solid-state batteries to include high contents of positive electrode active materials to enhance the energy density, while also securing both ionic conductivity and electronic conductivity to enhance the high-rate characteristics and life characteristics.

[Prior Art Reference]

[Patent Document]

(Patent Document 1) U.S. Patent No. 10,333,171

[Detailed Description of Invention]

[Technical Problems]

As a result of extensive research to solve the above problems, the inventors of the present disclosure have confirmed that when the composition within the positive electrode active material layer is regulated in a positive electrode for an all-solid-state battery that has a positive electrode active material layer formed with a high content of positive electrode active material, if the ratio of ionic conductivity to electronic conductivity in the positive electrode active material layer becomes equal, the performance of the battery, such as high-rate characteristics and life characteristics, can be improved.

Accordingly, it is an objective of the present disclosure to provide a positive electrode having a layer of positive-electrode active material with an ionic conductivity and an electronic conductivity at an equivalent level.

Another objective of the present disclosure is to provide an all-solid-state battery having improved battery performance, such as high-rate characteristics and life characteristics, including a positive electrode having a layer of positive-electrode active material with an ionic conductivity and an electronic conductivity equivalent to the ionic conductivity.

[Technical Solution]

To achieve the aforementioned objectives, the present disclosure provides a positive electrode for an all-solid-state battery comprising a positive electrode active material layer, wherein: the positive electrode active material layer comprises a positive electrode active material, a sulfide-based solid electrolyte, a conductive material, and a binder; and the ratio ($R_{IC/EC}$) of the ionic conductivity (IC) to the electronic conductivity (EC) of the positive electrode active material layer, as defined by the following equation 1, is 0.5 to 1.5:

<Equation 1>

$$R_{IC/EC} = \text{ionic conductivity/electronic conductivity}.$$

In an example of the present disclosure, there is provided a positive electrode for an all-solid-state battery, wherein the ratio of the ionic conductivity to the electronic conductivity is calculated from a Nyquist plot obtained by Electrochemical Impedance Spectroscopy (EIS) analysis.

In an example of the present disclosure, the positive electrode active material is one or more selected from the group consisting of: a layered compound such as lithium cobalt oxide ($LiCoO_2$), lithium nickel oxide ($LiNiO_2$), Li[$Ni_xCo_yMn_zM_v$]$O_2$ (where M is one or two or more elements selected from the group consisting of: Al, Ga, and In; $0.3 \leq x < 1.0$, $0 \leq y$, $z \leq 0.5$, $0 \leq v \leq 0.1$, $x+y+z+v=1$), Li($Li_aM_{b-a-b'}M'_{b'}$)$O_{2-c}A_c$ (where $0 \leq a \leq 0.2$, $0.6 \leq b \leq 1$, $0 < b' \leq 0.2$, $0 \leq c \leq 0.2$; M includes Mn and one or more selected from the group consisting of: Ni, Co, Fe, Cr, V, Cu, Zn, and Ti; M' is one or more selected from the group consisting of: Al, Mg, and B; and A is one or more selected from the group consisting of: P, F, S, and N), or a compound thereof where a part of metal elements in the layered compound is replaced with one or more transition metals; lithium manganese oxides such as those represented by a formula $Li_{1+y}Mn_{2-y}O_4$ (where y is 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni site-type lithium nickel oxides represented by a formula $LiNi_{1-y}M_yO_2$ (where M=Co, Mn, Al, Cu, Fe, Mg, B, or Ga, and y is 0.01 to 0.3); lithium manganese composite oxides represented by a formula $LiMn_{2-y}M_yO_2$ (where M is Co, Ni, Fe, Cr, Zn, or Ta, and y is 0.01 to 0.1) or $Li_2Mn_3MO_8$ (where M is Fe, Co, Ni, Cu, or Zn); formula $LiMn_2O_4$ where a part of Li in the formula is replaced with alkaline earth metal ions; disulfide compounds; and $Fe_2(MoO_4)_3$.

In an example of the present disclosure, the sulfide-based solid electrolyte provides a positive electrode for an all-solid-state battery, wherein the sulfide-based solid electrolyte comprises one or more species selected from the group consisting of LiPSX (X = Cl, Br, or I), LiGePS, and LiPS.

In an example of the present disclosure, the sulfide-based solid electrolyte provides a positive electrode for an all-solid-state battery, wherein the sulfide-based solid electrolyte is in the form of particles having a particle diameter (D50) of 0.1 μm to 1.5 μm.

**In** an example of the present disclosure, the conductive material provides a positive electrode for an all-solid-state battery, wherein the conductive material comprises one or more species selected from the group consisting of carbon nanotube (CNT) and carbon nanofiber (CNF).

**In** an example of the present disclosure, the binder includes one or more selected from the group consisting of: polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenol resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

**In** an example of the present disclosure, the positive electrode active material layer comprises: 69 to 94 wt% of the positive electrode active material; 5 to 30 wt% of the sulfide-based solid electrolyte; - 0.01 to 10 wt% of the conductive material; and 0.01 to 10 wt% of the binder.

The present disclosure also provides an all-solid-state battery comprising a positive electrode, a negative electrode, and a sulfide-based solid electrolyte film interposed therebetween.

In an example of the present disclosure, an all-solid-state battery is provided wherein the negative electrode comprises a lithium-containing negative-electrode active material layer or an anodeless coating layer.

[Effect of Invention]

According to the positive electrode for the all-solid-state battery of the present disclosure, by regulating the composition of the sulfide-based solid electrolyte and the conductive material within the positive electrode active material layer to make the ratio of ionic conductivity to electronic conductivity equal, the positive electrode can be designed to have a balanced ionic conductivity and electronic conductivity. As a result, the high-rate charge-discharge characteristics and life characteristics of the all-solid-state battery can be secured.

In addition, the ratio of ionic conductivity to electronic conductivity at the positive electrode can be used to predict the performance of a battery.

[Brief Description of the Drawings]

FIG. 1 is a schematic diagram illustrating a cross-sectional view of an electrochemical cell used for an electrochemical impedance analysis in accordance with an example of the present disclosure.

FIG. 2 illustrates an example of a Nyquist plot shown in an electrochemical impedance analysis in accordance with an example of the present disclosure.

FIG. 3 is a schematic diagram illustrating a cross-sectional view of an all-solid-state battery in accordance with an example of the present disclosure.

[Best Mode for Carrying out the Invention]

Hereinafter, the present disclosure will be described in more detail to provide a better understanding of the present disclosure.

The terms and words used in this specification and the claims are not to be construed in their ordinary or dictionary sense, but rather in a sense and concept consistent with the technical idea of the present disclosure, based on the principle that the inventor may define the concept of a term as he sees fit to best describe his invention.

The terms "ionic conductivity" and "electronic conductivity" used in this specification refer to measures indicating the tendency of ions and electrons to conduct, respectively. The sum of the ionic conductivity and electronic conductivity can be considered the "electrical conductivity".

**Positive electrode for all-solid-state battery**

The present disclosure relates to a positive electrode for an all-solid-state battery.

The positive electrode for the all-solid-state battery of the present disclosure contains a high content of positive electrode active material to enhance the energy density. Despite the limited content of the sulfide-based solid electrolyte and conductive material that can be included, by regulating the ratio of the sulfide-based solid electrolyte and conductive material to make the ratio of ionic conductivity to electronic conductivity equal, it can not only achieve the improved energy density effect, but also secure the high-rate characteristics and life characteristics. In the positive electrode for an all-solid-state battery according to the present disclosure, a high content of the positive-electrode active material may mean 69% or more by weight based on the total weight of the positive-electrode active material layer.

A positive electrode for an all-solid-state battery according to the present disclosure includes a positive-electrode active material layer. The positive-electrode active material layer comprises a positive-electrode active material, a sulfide-based solid electrolyte, a conductive material, and a binder. The ratio ($R_{IC/EC}$) of the ionic conductivity (IC) and the electronic conductivity (EC) of the positive-electrode active material layer is between 0.5 and 1.5, and is defined by Equation 1 below:

$$< \text{Equation 1} >$$

$$R_{IC/EC} = \text{Ionic conductivity/Electronic conductivity}$$

The $R_{IC/EC}$ may be 0.5 or more, 0.7 or more, or 0.9 or more, and may be 1.1 or less, 1.3 or less, or 1.5 or less, or may be 1. When $R_{IC/EC}$ is in the range of 0.5 to 1.5, it indicates that the ionic conductivity and electronic conductivity properties of the positive electrode are balanced, without being biased toward either, which can improve the overall performance of the battery.

The positive-electrode active material layer may be self-supporting, such that it is self-standing and does not require a separate collector. For example, the self-supporting positive-electrode active material layer may be manufactured by a solvent-free dry process.

Alternatively, the positive-electrode active material layer may be manufactured by a wet process utilizing a solvent, and the wet process manufactured positive-electrode active material layer may be formed on one surface of the positive electrode collector.

In an example of the present disclosure, the ratio of ionic conductivity to electronic conductivity ($R_{IC/EC}$) may be calculated from a Nyquist plot obtained by an Electrochemical Impedance Spectroscopy (EIS) analysis. However, the method of analysis is not limited thereto, and any method known in the art for calculating the ratio of ionic conductivity to electronic conductivity ($R_{IC/EC}$) may be used.

The ionic conductivity may be from $1.0 \times 10^{-6}$ S/cm to $1.0 \times 10^{-1}$ S/cm.

The electronic conductivity may be from $1.0 \times 10^{-6}$ S/cm to $1.0 \times 10^{-1}$ S/cm.

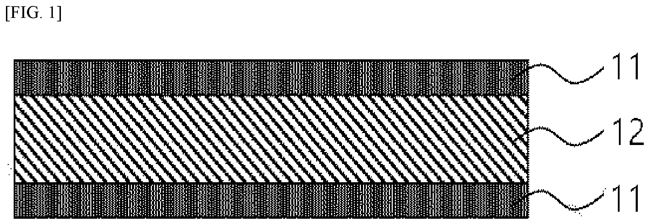

FIG. 1 is a schematic cross-sectional view of an electrochemical cell used for an electrochemical impedance analysis in accordance with an example of the present disclosure.

Referring to FIG. 1, in an electrochemical impedance analysis, the electrochemical cell can be manufactured so that a positive-electrode active material layer 12 is disposed between two positive electrode collectors 11 to analyze ionic conductivity and electronic conductivity (Journal of power sources, 2016, 316, 215-223).

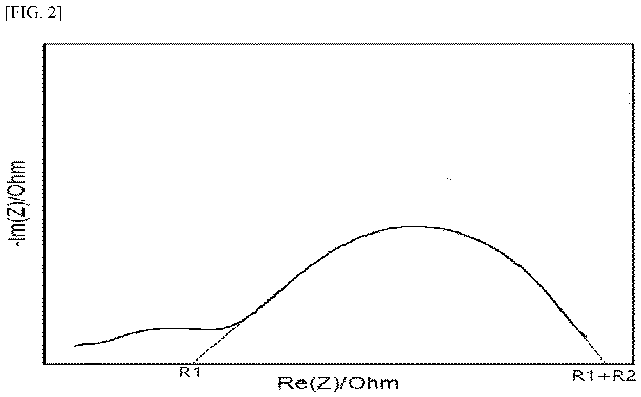

For example, when applying AC impedance in the frequency range of 10 mHz to 1 mHz to the electrochemical cell and plotting the Nyquist plot of the measured impedance, curves with multiple consecutive semicircle-like shapes may be displayed. As shown in FIG. 2, there are three curves of different sizes displayed consecutively from the high-frequency region (left side of the X-axis) to the low-frequency region (right side of the X-axis). By fitting the low-frequency region of this plot to an equivalent circuit, the resistance values R1 and R2 can be obtained. Then, the electronic resistance RE = R1 + R2 and the ionic resistance RI = (R1 + R2)*R1/R2 can be calculated using these R1 and R2 values. Each resistance can be converted to the conductivity of the electrode, taking into account the thickness and area of the electrode. In this case, the equivalent circuit can be the R1+Q2/R2 model (R: Resistor, Q: Constant Phase Element).

In an example of the present disclosure, the weight ratio of the sulfide-based solid electrolyte and the conductive material can be selected by appropriately adjusting the ratio of the ionic conductivity and the electronic conductivity of the positive-electrode active material layer so that the ratio of the ionic conductivity and the electronic conductivity of the positive-electrode active material layer can be as set forth in equation 1. At this time, the weight ratio of the positive-electrode active material, the sulfide-based solid electrolyte, and the conductive material used to manufacture the positive-electrode active material layer may be adjusted in consideration of the intrinsic ionic conductivity and electronic conductivity of each of the positive-electrode active material, the sulfide-based solid electrolyte, and the conductive material. For example, the weight ratio of the sulfide-based solid electrolyte to the conductive material may be 14.1 ~ 14.8 : 0.2 ~ 0.9 or 14.3 ~ 14.7 : 0.3 ~ 0.7, although not limited thereto. As mentioned earlier, the weight ratio can be adjusted by considering the intrinsic properties of the constituent components of the positive electrode active material layer.

In an example of the present disclosure, the positive electrode active material is not particularly limited as long as it can reversibly absorb and release lithium ions, and may be one the positive electrode active material is one or more selected from the group consisting of: a layered compound such as lithium cobalt oxide ($LiCoO_2$), lithium nickel oxide ($LiNiO_2$), $Li[Ni_xCo_yMn_zM_v]O_2$ (where M is one or two or more elements selected from the group consisting of: Al, Ga, and In; $0.3 \leq x < 1.0$, $0 \leq y$, $z \leq 0.5$, $0 \leq v \leq 0.1, x+y+z+v=1$), $Li(Li_aM_{b-a-b'}M'_{b'})O_{2-c}A_c$ (where $0 \leq a \leq 0.2$, $0.6 \leq b \leq 1$, $0 \leq b' \leq 0.2$, $0 \leq c \leq 0.2$; M includes Mn and one or more selected from the group consisting of: Ni, Co, Fe, Cr, V, Cu, Zn, and Ti; M' is one or more selected from the group consisting of: Al, Mg, and B; and A is one or more selected from the group consisting of: P, F, S, and N), or a compound thereof where a part of metal elements in the layered compound is replaced with one or more transition metals; lithium manganese oxides such as those represented by a formula $Li_{1+y}Mn_{2-y}O_4$ (where y is 0 to 0.33), $LiMnO_3$, $LiMn_2O_3$, and $LiMnO_2$; lithium copper oxide ($Li_2CuO_2$); vanadium oxides such as $LiV_3O_8$, $LiFe_3O_4$, $V_2O_5$, and $Cu_2V_2O_7$; Ni site-type lithium nickel oxides represented by a formula $LiNi_{1-y}M_yO_2$ (where M=Co, Mn, Al, Cu, Fe, Mg, B, or Ga, and y is 0.01 to 0.3); lithium manganese composite oxides represented by a formula $LiMn_{2-y}M_yO_2$ (where M is Co, Ni, Fe, Cr, Zn, or Ta, and y is 0.01 to 0.1) or $Li_2Mn_3MO_8$ (where M is Fe, Co, Ni, Cu, or Zn); formula $LiMn_2O_4$ where a part of Li in the formula is replaced with alkaline earth metal ions; disulfide compounds; and $Fe_2(MoO_4)_3$.

Further, the positive-electrode active material may be presented from 69 to 94 wt%, based on the total weight of the positive-electrode active material layer. Specifically, the content of the positive-electrode active material may be 69 wt% or more, 70 wt% or more, 71 wt% or more, 72 wt% or more, 73 wt% or more, 74 wt% or more, 75 wt% or more, 76 wt% or more, 77 wt% or more, 78 wt% or more, 79 wt% or more, or 80 wt% or more, and 94 wt% or less, 93 wt% or less, 92 wt% or less, 91 wt% or less, 90 wt% or less, 89 wt% or less, 88 wt% or less, 87 wt% or less, 86 wt% or less, or 85 wt% or less. If the content of the positive-electrode active material is less than 69 wt%, the proportion of components of the battery that do not participate in the reaction may increase, resulting in a decrease in energy density, and if the content is 94 wt% or more, the ionic conductivity and electronic conductivity required to drive the battery may not be obtained.

Further, the positive-electrode active material may be coated with an insulating material. As the positive-electrode active material is coated with an insulating material, the reaction of the positive-electrode active material with the solid electrolyte can be limited, thereby reducing the resistance.

The insulating material may comprise one or more species selected from the group consisting of: an oxide and a fluoride. The oxide may comprise one or more metal oxides selected from the group consisting of: $Al_2O_3$, $Cr_2O_3$, $TiO_2$, $SiO_2$, $ZrO_2$ and $Fe_2O_3$. Further, the fluoride may comprise one or more species selected from the group consisting of: polyvinylidene fluoride (PVdF) and polyvinylidene fluoride copolymer.

Further, the thickness of the insulating material coating layer may be 20 nm or less. If the thickness is greater than 20 nm, it may act as a resistance when driving the battery. Specifically, the thickness may be 20 nm or less, 19 nm or less, 18 nm or less, 17 nm or less, 16 nm or less, 15 nm or less, 14 nm or less, 13 nm or less, 12 nm or less, 11 nm or less, 10 nm or less, 9 nm or less, 8 nm or less, 7 nm or less, 6 nm or less, or 5 nm or less. The lower limit of the thickness is not particularly limited, but may be, for example, 1 nm or more or 2 nm or more.

In an example of the present disclosure, the sulfide-based solid electrolyte is a solid electrolyte comprising sulfur in the solid electrolyte, which can be added to the positive-electrode active material layer to enhance the ionic conductivity.

The sulfide-based solid electrolyte may comprise one or more species selected from the group consisting of: LiPSX (X = Cl, Br, or I), LiGePS, and LiPS. However, the sulfide-based solid electrolyte is not limited thereto, and any sulfide-based solid electrolyte conventionally used in the art may be used.

Further, the sulfide-based solid electrolyte may be in the form of particles having a particle diameter (D50) of 0.1 $\mu$m to 1.5 $\mu$m. Specifically, the median particle size (D50) of the sulfide-based solid electrolyte may be 0.1 $\mu$m or more, 0.3 $\mu$m or more, 0.5 $\mu$m or more, and may be 0.9 $\mu$m or less, 1.0 $\mu$m or less, 1.2 $\mu$m or less, or 1.5 $\mu$m or less. If the median particle size (D50) of the sulfide-based solid electrolyte is less than 0.1 $\mu$m, the ultra-fine sulfide-based solid electrolyte particles may not be sufficiently dispersed within the positive electrode active material layer and can agglomerate. Also, if it exceeds 1.5 $\mu$m, the dispersion may be relatively easy, but the contact area with the positive electrode active material particles can decrease, leading to an increase in the porosity of the positive electrode.

Further, the sulfide-based solid electrolyte may be presented from 5 to 30 wt%, based on the total weight of the positive-electrode active material layer. Specifically, the content of the sulfide-based solid electrolyte may be 5 wt% or more, 6 wt% or more, 7 wt% or more, 8 wt% or more, 9 wt% or more, 10 wt% or more, 11 wt% or more, 12 wt% or more, 13 wt% or more, 14 wt% or more, 14.1 wt% or more, or 14.3 wt% or more, and may be 30 wt% or less, 29 wt% or less, 28 wt% or less, 27 wt% or less, 26 wt% or less, 25 wt% or less, 24 wt% or less, 23 wt% or less, 22 wt% or less, 21 wt% or less, 20 wt% or less, 19 wt% or less, 18 wt% or less, 17 wt% or less, 16 wt% or less, 15 wt% or less, 14.9 wt% or less, 14.8 wt% or less, or 14.7 wt% or less. If the content of the sulfide-based solid electrolyte is less than 5 wt%, the ionic conductivity may be reduced, and if it is more than 30 wt%, the content of the positive-electrode active material and the conductive material may be relatively reduced, resulting in a degradation in the performance of the battery.

In an example of the present disclosure, the conductive material can enhance electronic conductivity by forming paths for conducting electrons.

The conductive material may be a linear conductive material, wherein the linear conductive material may be one or more species selected from the group consisting of carbon nanotubes (CNTs) and carbon nanofibers (CNFs). The linear conductive material may enhance the electronic conductivity due to its morphological characteristics. For example, the linear conductive material may have an aspect ratio (length/diameter) of 2 or more, and more specifically, the aspect ratio may be 2 or more, 5 or more, 10 or more, 20 or more, 30 or more, 40 or more, 50 or more, or 100 or more. If the aspect ratio is less than 2, it may be difficult to form electron conduction paths, resulting in a decrease in electronic conductivity. Further, the upper limit of the aspect ratio is not particularly limited, but may be 300 or less, 400 or less, 500 or less, 600 or less, or 700 or less, considering the convenience of forming electron conduction paths.

Further, the conductive material may be presented from 0.01 to 10 wt% based on the total weight of the positive-electrode active material layer. Specifically, the content of the conductive material may be 0.01 wt% or more, 0.1 wt% or more, 0.2 wt% or more, or 0.3 wt% or more, and may be 10 wt% or less, 9 wt% or less, 8 wt% or less, 7 wt% or less, 6 wt% or less, 5 wt% or less, 4 wt% or less, 3 wt% or less, 2 wt% or less, 1 wt% or less, 0.9 wt% or less, 0.8 wt% or less, or 0.7 wt% or less. If the content of the conductive material is less than 0.01 wt%, the electronic conductivity of the positive electrode may be reduced, and if the content is greater than 10 wt%, the resistance may be increased as the side reaction of the solid electrolyte increases, and the content of the positive-electrode active material and the sulfide-based solid electrolyte may be relatively reduced, resulting in a decrease in the performance of the battery.

In an example of the present disclosure, the binder may be presented to facilitate bonding between materials included in the positive-electrode active material layer and bonding between the positive-electrode active material layer and the positive electrode collector.

The binder may be a fibrous binder. The binder may fiberize while mixing during the manufacture of the positive electrode and may be presented in a fibrous form in the positive-electrode active material layer. Therefore, it is desirable that the binder be easily modifiable in its physical properties.

Additionally, the binder may comprise one or more species selected from the group consisting of: polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be presented from 0.01 to 10 wt% based on the total weight of the positive-electrode active material layer. Specifically, the content of the binder may be 0.01 wt% or more, 1 wt% or more, or 2 wt% or more, and may be 10 wt% or less, 9 wt% or less, 8 wt% or less, 7 wt% or less, 6 wt% or less, 5 wt% or less, 4 wt% or less, or 3 wt% or less. If the content of the binder is less than 0.01 wt%, the effect of improving the cohesion between the materials contained in the positive-electrode active material layer is insignificant and the electrode sheet may not be formed properly, and if the content is greater than 10 wt%, the ionic conductivity or electronic conductivity may be degraded.

In an example of the present disclosure, the thickness of the positive-electrode active material layer may be from 100 $\mu$m to 300 $\mu$m, more specifically, it may be 100 $\mu$m or more, 110 $\mu$m or more, or 120 $\mu$m or more, and 200 $\mu$m or less, 250 $\mu$m or less, or 300 $\mu$m or less. However, the thickness of the positive-electrode active material layer is not limited thereto, and the ratio of the solid electrolyte to the conductive material can be adjusted such that the ratio of the ionic conductivity to the electronic conductivity is between 0.5 and 1.5 depending on the target loading of the positive-electrode active material layer.

In an example of the present disclosure, the positive electrode collector supports the positive electrode active material layer and serves to transfer electrons between the outer conductor and the positive electrode active material layer.

The positive electrode collector is not particularly limited as long as it has a high electronic conductivity without causing chemical changes in the all-solid-state battery. For example, stainless steel, aluminum, nickel, titanium, palladium, calcined carbon, stainless steel with a surface treatment of carbon, nickel, silver, or the like, aluminum-cadmium alloys, and the like may be used as the positive electrode collector.

The positive electrode collector may have a microscopic uneven structure or adopt a three-dimensional porous structure on the surface of the positive electrode collector to strengthen the binding force with the positive-electrode active material layer. Accordingly, the positive electrode collector may comprise a film, sheet, foil, mesh, net, porous body, foam, non-woven fabrics, and the like.

**Method for manufacturing positive electrode for all-solid-state battery**

The present disclosure also relates to a method of manufacturing a positive electrode for an all-solid-state battery.

The method for the manufacture of a positive electrode for an all-solid-state battery according to the present disclosure may be a wet process or a dry process, with or without the use of solvents. The specific substances, properties, and contents of the positive-electrode active material, sulfide-based solid electrolyte, conductive material, and binder used in the method of manufacturing the positive electrode for an all-solid-state battery according to the present disclosure are as described above.

The manufacturing method of the positive electrode for the all-solid-state battery according to the present disclosure includes a wet process comprising: (A1) a step of forming a slurry by adding the positive electrode active material, sulfide-based solid electrolyte, conductive material, and binder to an organic solvent; (A2) a step of coating the slurry formed in step (A1) onto a positive electrode collector; and (A3) a step of drying the coating layer formed in step (A2).

Hereinafter, the wet process of a method of manufacturing a positive electrode for an all-solid-state battery will be described in more detail for each step.

In an example of the present disclosure, in step (A1) above, a positive-electrode active material, a sulfide-based solid electrolyte, a conductive material, and a binder may be added to an organic solvent to form a slurry.

The organic solvent is capable of uniformly dispersing the positive-electrode active material, sulfide-based solid electrolyte, conductive material, and binder, and is preferably readily evaporated. Specific examples include acetonitrile, methanol, ethanol, tetrahydrofuran, water, isopropyl alcohol, and the like.

Furthermore, the concentration of the slurry is not particularly limited as long as it allows for smooth progression of the coating process. For example, the concentration of the slurry may be 30 to 50 percent by weight based on solid content.

In an example of the present disclosure, in step (A2) above, the slurry formed in step (A1) above can be coated onto a positive electrode collector.

The coating method is not particularly limited as long as the coating layer can be formed using a slurry. For example, the coating in step (A2) can be performed by roll coating, gravure coating, doctor blade coating, slot die coating, slurry coating, or extrusion coating.

In an example of the present disclosure, in step (A3), the coating layer formed in step (A2) may be dried.

Furthermore, the drying is not particularly limited as long as the method is dry enough to remove the organic solvent from the coating layer. For example, the drying may be drying at a temperature of 80 to 130°C.

In the method of manufacturing a positive electrode for an all-solid-state battery according to the present disclosure, the dry process includes: (B 1) a step of mixing a positive-electrode active material, a sulfide-based solid electrolyte, a conductive material, and a binder; and (B2) a step of forming the mixed powder obtained in step (B1) into a film shape by applying a calendering process.

Hereinafter, a dry process of a method for the manufacture of a positive electrode for an all-solid-state battery will be described in more detail for each step.

In an example of the present disclosure, in step (B1) above, a positive-electrode active material, a sulfide-based solid electrolyte, a conductive material, and a binder are mixed to obtain a mixed powder.

Alternatively, the mixing may be physical mixing without the use of a separate solvent, and the binder may be fiberized by physical mixing. During the physical mixing, the binder may be physically deformed by shear force as it rubs against the particles in the mixed powder, causing it to fiberize. In order to induce such physical deformation, a binder that is physically very weak and relatively prone to fiberization can be used as a binder, for example, PTFE, which has properties that allow physical deformation to occur easily as a binder. Furthermore, physical deformation can be accomplished by introducing induction, ball milling, or roll pressing during mixing.

In an example of the present disclosure, in step (B2) above, the mixed powder obtained in step (B1) above may be subjected to a calendaring process to mold it into a film.

The conditions of the calendering process may be the application of suitably regulated process conditions to form a film. For example, the calendering process may be performed at a temperature of 20°C to 200°C and for 5 to 50 loops. However, the calendering process conditions, such as temperature pressure, number of loops, etc. may be any of those used in electrode manufacture processes used in the battery field in the art.

**All-solid-state battery**

The present disclosure also relates to an all-solid-state battery comprising the aforementioned positive electrode.

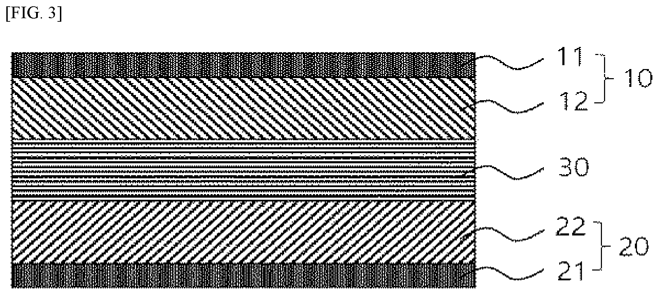

FIG. 3 is a schematic cross-sectional view of an all-solid-state battery in accordance with an example of the present disclosure.

Referring now to FIG. 3, an all-solid-state battery according to the present disclosure includes a positive electrode 10, a negative electrode 20, and a sulfide-based solid electrolyte film 30 interposed therebetween. The positive electrode 10 has a structure in which the positive electrode active material layer 12 is formed on one surface of the positive electrode collector 11, the negative electrode 20 has a structure in which the negative electrode active material layer 22 is formed on one surface of the negative electrode collector 21, and the sulfide-based solid electrolyte film 30 is interposed between the positive electrode active material layer 12 and the negative electrode active material layer 22. However, the all-solid-state battery according to the present disclosure is not limited to such a structure, and if the positive-electrode active material layer 12 is capable of self-standing, it may not include a positive electrode collector, and the negative-electrode active material layer may be an anodeless coating layer.

In an example of the present disclosure, the negative electrode may comprise a negative-electrode active material layer or an anodeless coating layer. Further, the negative-electrode active material layer or anodeless coating layer may be formed on one surface of the negative electrode collector.

The negative-electrode active material layer includes a negative-electrode active material, a binder, and a conductive material.

The negative-electrode active material may include a material capable of reversibly intercalating or deintercalating lithium ($Li^+$), a material capable of reacting with lithium ions to reversibly form a lithium-containing compound, a lithium metal, or a lithium alloy.

The material into which the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate, or silicon. The lithium alloy may be an alloy of lithium (Li) with a metal selected from the group consisting of: indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative-electrode active material may be a lithium metal or a lithium-indium alloy (Li-In), more specifically, it may be a lithium metal or lithium and thin film or a lithium-indium alloy thin film or powder.

The negative-electrode active material may be presented from 40 to 80 wt% based on the total weight of the negative-electrode active material layer. Specifically, the content of the negative-electrode active material may be 40 wt% or more, 50 wt% or more, and 70 wt% or less, or 80 wt% or less. If the content of the negative-electrode active material is less than 40 wt%, the connectivity between the wet negative-electrode active material layer and the dry negative-electrode active material layer may be insufficient, and if the content is greater than 80 wt%, the mass transfer resistance may be large.

Furthermore, the binder, as a component that assists in binding the negative-electrode active material and conductive material, as well as binding to the negative electrode collector, may comprise one or more species selected from the group consisting of: styrene-butadiene rubber, acrylate-modified styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenol resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may include polytetrafluoroethylene (PTFE).

Furthermore, the binder may be presented in an amount of 0.5 to 4 wt% based on the total weight of the negative electrode active material layer, and specifically, the content of the binder can be 0.5 wt% or more, 1 wt% or more, or 1.5 wt% or more, and 3 wt% or less, 3.5 wt% or less, or 4 wt% or less. If the binder content is less than 0.5 wt%, the adhesion of the positive-electrode active material to the negative-electrode collector may be impaired, and if the binder content is greater than 4 wt%, the adhesion may be improved, but the content of the negative-electrode active material may be reduced, resulting in a lower battery capacity.

Furthermore, the conductive material is not particularly limited as long as it has excellent electronic conductivity while preventing side reactions and not causing chemical changes in the all-solid-state battery, and typically, graphite or conductive carbon can be used. The materials that may be used as the conductive material are: graphite such as natural graphite and artificial graphite; carbon blacks such as carbon black, acetylene black, Ketjen black, Denka black, thermal black, channel black, furnace black, lamp black, and thermal black; carbon-based materials with graphene or graphite crystal structures; conductive fibers such as carbon fibers and metal fibers; fluorinated carbon; metal powders such as aluminum powder and nickel powder; conductive whiskers such as zinc oxide and potassium titanate; conductive oxides such as titanium oxide; and conductive polymers such as polyphenylene derivatives, which are used alone or in a mixture of two or more thereof. Preferably, the conductive material may comprise vapor-grown carbon fiber (VGCF).

The conductive material may typically be presented in an amount of 1 to 5 wt% based on the total weight of the negative electrode active material layer, and specifically, the content of the conductive material can be 1 wt% or more, 1.5 wt% or more, or 2 wt% or more, and 4 wt% or less, 4.5 wt% or less, or 5 wt% or less. If the content of the conductive material is too small, such as less than 1 wt%, it is difficult to expect the effect of improving the electronic conductivity or the electrochemical properties of the battery may be degraded, and if the content of the conductive material is too large, such as more than 5 wt%, the amount of the negative-electrode active material is relatively small, and the capacity and energy density may be degraded. The method of including the conductive material in the negative electrode is not substantially limited, and any conventional method known in the art can be used, such as mixing, coating, etc. with the negative-electrode active material.

Furthermore, the negative electrode collector is not particularly limited as long as it has conductivity without causing chemical changes in the battery. For example, the negative electrode collector can be made of copper, stainless steel, aluminum, nickel, titanium, sintered carbon, or materials with carbon, nickel, titanium, or silver surface treatment on copper or stainless steel, or aluminum-cadmium alloy. In addition, the negative electrode collector, like the positive electrode collector, can be used in various forms, such as a film, sheet, foil, net, porous material, foam, nonwoven fabrics, etc. with fine irregularities formed on the surface.

The method of manufacturing the negative electrode is not particularly limited, and can be manufactured by forming a layer of negative-electrode active material on the negative electrode collector using a layer or film formation method conventionally used in the art. For example, methods such as pressing, coating, deposition, and the like can be utilized. The negative electrode of the present disclosure also includes a case in which a metallic lithium thin film is formed on a metal plate by initial charging after the battery is assembled without a lithium thin film on the negative electrode collector.

Further, the anodeless coating layer may refer to a negative-electrode active material layer that does not include a negative-electrode active material. A negative-electrode active material may be formed on the anodeless coating layer by charging. For example, when charging a battery, lithium ions may be transferred from the positive electrode and lithium metal may be precipitated from the negative electrode. In other words, the anodeless coating layer may be a film that induces lithium precipitation.

The anodeless coating layer may comprise metal particles and carbon material particles, and more specifically, may comprise a carbon material-metal composite.

The carbon material particles may be, for example, amorphous carbon material particles. However, the carbon material particles are not limited to amorphous particles. Specific examples of amorphous carbon materials include carbon black such as acetylene black, furnace black, and ketchen black, graphene, or combinations thereof.

Furthermore, the metal particles can be particles that form an alloy with lithium. The metal particles can be selected from one or more of silver (Ag), gold, platinum, palladium, silicon, aluminum, bismuth, tin, indium, and zinc. The anodeless coating layer can be formed as a very thin film with a micro-thickness, for example, it can be formed with a thickness of 10 $\mu$m or less.

Preferably, the anodeless coating layer may comprise an Ag-C composite as a carbon-metal composite, and upon first charging, lithium may precipitate between the negative electrode collector and the coating layer comprising the Ag-C composite.

In an example of the present disclosure, the sulfide-based solid electrolyte included in the sulfide-based solid electrolyte film may comprise one or more species selected from the group consisting of: LiPSX (X = Cl, Br, or I), LiGePS, and LiPS. However, the sulfide-based solid electrolyte is not limited thereto, and any sulfide-based solid electrolyte conventionally used in the art may be used.

**Battery module**

The present disclosure also relates to a battery module comprising the all-solid-state battery as a unit battery, a battery pack comprising the battery module, and a device comprising the battery pack as a power source.

In this case, specific examples of devices that can use the battery include power tools driven by a battery-powered motor, electric vehicles (EVs), hybrid electric vehicles (HEVs), and plug-in hybrid electric vehicles (PHEVs), electric two-wheelers such as electric bicycles (E-bikes) and electric scooters (E-scooters), electric golf carts, and energy storage systems, but these examples are not limited. A preferred example of the present disclosure is described below for the purpose of illustrating the present disclosure, but it will be apparent to those skilled in the art that various changes and modifications are possible within the scope and technical ideas of the present disclosure, and that such changes and modifications fall within the scope of the appended patent claims.

[Best Mode for practicing the invention]

A preferred example of the present disclosure is described below for the purpose of illustrating the present disclosure, but it will be apparent to those skilled in the art that various changes and modifications are possible within the scope of the present disclosure and the technical idea, and that such changes and modifications fall within the scope of the appended patent claims.

In the following example and comparative example, a positive electrode and an all-solid-state battery comprising the positive electrode were manufactured according to the composition of the positive-electrode active material layer as described in Table 1 below.

[Table 1]

| | Composition of the positive-electrode active material layer (weight%) | | | | Ratio of ionic conductivity to electronic conductivity. | | |
|---|---|---|---|---|---|---|---|
| | Positive-electrode active material | Sulfide-based solid electrolyte | Conductive material | Binder | Tonic conductivity (S/cm) | Electronic conductivity (S/cm) | $R_{IC/EC}$ |
| Example 1 | 84 | 14.5 | 0.5 | 1 | 3.27E-05 | 3.15E-05 | 1.04 |
| Example 2 | 84 | 14.7 | 0.3 | 1 | 3.41E-05 | 2.42E-05 | 1.41 |
| Example 3 | 84 | 14.3 | 0.7 | 1 | 2.94E-05 | 4.27E-05 | 0.69 |
| Example 4 | 80 | 18 | 1 | 1 | 6.62E-05 | 4.80E-05 | 1.38 |
| Example 5 | 88 | 10.9 | 0.1 | 1 | 1.96E-05 | 2.27E-05 | 0.86 |
| Comp. ex. 1 | 84 | 13.5 | 1.5 | 1 | 2.16E-05 | 1.57E-05 | 0.01 |
| Comp. ex. 2 | 80 | 16 | 3 | 1 | 6.12E-05 | 9.33E-03 | 0.01 |
| Comp. ex. 3 | 90 | 8 | 1 | 1 | 6.44E-06 | 2.12E-04 | 0.03 |

**Example 1**

1-1. <u>Manufacture of positive-electrode active material layer</u>

The positive electrode was manufactured as follows using $LiN_{0.8}Co_{0.1}Mn_{0.1}O_2$ (NCM 811) as the positive-electrode active material, $Li_6PS_5Cl$ as the sulfide-based solid electrolyte, CNF as the linear conductive material, and polytetrafluoroethylene (PTFE) as the binder.

The positive-electrode active material, sulfide-based solid electrolyte, conductive material, and binder were subjected to powder mixing at a weight ratio of 84 : 14.5 : 0.5 : 1. Specifically, the positive-electrode active material, sulfide-based solid electrolyte, and conductive material were weighed in powder form and then mixed for 30 minutes using a blade mixer in a dry room environment without using any separate solvent to obtain a mixture. Subsequently, PTFE (Polytetrafluoroethylene) powder as the binder was weighed and additionally mixed to obtain a mixed powder.

The mixed powder was added to a mortar, fiberized in the mortar, and then subjected to calendering on rollers to manufacture a positive electrode with a thickness of 150 μm and an $R_{IC/EC}$ ratio of 1.04.

$R_{IC/EC}$ was calculated by extracting ionic conductivity and electronic conductivity from Nyquist plots obtained by Electrochemical Impedance Spectroscopy (EIS) analysis utilizing BioLogic's SP-50e instrument. The calculated values in $R_{IC/EC}$ are rounded to three decimal places.

1-2. <u>Manufacture of all-solid-state batteries</u>

An all-solid-state battery was manufactured by sequentially stacking a negative electrode collector (copper, Cu), a sulfide-based solid electrolyte film composed of lithium metal, $Li_6PS_5Cl$, the aforementioned positive electrode, and a positive electrode collector (aluminum, Al).

**Example 2**

A positive electrode with $R_{IC/EC}$ = 1.41 was prepared using the same method as in example 1, except that the positive-electrode active material, sulfide-based solid electrolyte, conductive material, and binder were used in a weight ratio of 84 : 14.7 : 0.3 : 1.

**Example 3**

A positive electrode with $R_{IC/EC}$ = 0.69 was prepared using the same method as in example 1, except that the positive-electrode active material, sulfide-based solid electrolyte, conductive material, and binder were used in a weight ratio of 84 : 14.3 : 0.7 : 1.

**Example 4**

A positive electrode with $R_{IC/EC}$ = 1.38 was prepared using the same method as in example 1, except that the positive-electrode active material, sulfide-based solid electrolyte, conductive material, and binder were used in a weight ratio of 80 : 18 : 1 : 1.

**Example 5**

A positive electrode with $R_{IC/EC}$ = 0.86 was prepared using the same method as in example 1, except that the positive-electrode active material, sulfide-based solid electrolyte, conductive material, and binder were used in a weight ratio of 88 : 10.9 : 0.1 : 1.

**Comparative example 1**

A positive electrode with $R_{IC/EC}$ = 0.01 was prepared using the same method as in example 1, except that the positive-electrode active material, sulfide-based solid electrolyte, conductive material, and binder were used in a weight ratio of 84 : 13.5 : 1.5 : 1.

**Comparative example 2**

A positive electrode with $R_{IC/EC}$ = 0.01 was prepared using the same method as in example 1, except that the positive-electrode active material, sulfide-based solid electrolyte, conductive material, and binder were used in a weight ratio of 80 : 16 : 3 : 1.

**Comparative example 3**

A positive electrode with $R_{IC/EC}$ = 0.03 was prepared by the same method as in example 1, except that the positive-electrode active material, sulfide-based solid electrolyte, conductive material, and binder were used in a weight ratio of 90 : 8 : 1 : 1.

**Experimental example 1: Evaluation of the performance of all-solid-state batteries**

The performance of all-solid-state batteries was evaluated according to the ratio ($R_{IC/EC}$) of the ionic conductivity and the electronic conductivity of the positive-electrode active material layer formed on the positive electrode. Examples 1 to 5 and comparative examples 1 to 3 were evaluated.

To evaluate the performance of the above all-solid-state battery, it was charged at a current of 0.1C to a voltage of 4.25V (vs. Li/Li$^+$) and then charged at a current cut-off of 0.05C while maintaining a voltage of 4.25V (vs. Li/Li$^+$). The battery was discharged at a current of 0.1C until a voltage of 3V (vs. Li/Li$^+$) was achieved. The process was repeated for 2 cycles and the discharge capacity of the second cycle was utilized as the 0.1C initial discharge capacity. The rate capability was then evaluated using a protocol that discharged up to 1C. Specifically, the rate capability was observed by CC discharging at 0.1C/0.33C/0.5C/1C while maintaining the 0.1C/0.05C CC/CV (Constant Current/Constant Voltage) charging process. The 1C capacity retention rate, which is calculated by dividing the 1C discharge capacity obtained through this evaluation process by the 0.1C initial discharge capacity, was utilized as a result of the high-rate characteristics. The 0.1 C initial discharge capacities and 1 C capacity retention rates measured in examples 1 through 5 and comparative examples 1 through 3 are listed in Table 2 below.

[Table 2]

|  | 0.1C Initial Discharge Capacity (mAh) | 1C discharge capacity (mAh) | 1C Capacity Retention (%) |
|---|---|---|---|
| Example 1 | 19.3 | 17.6 | 91.4 |
| Example 2 | 19.3 | 17.2 | 89.5 |
| Example 3 | 19.1 | 16.7 | 87.7 |
| Example 4 | 19.3 | 17.4 | 90.5 |
| Example 5 | 18.6 | 16.2 | 87.4 |
| Comp. ex. 1 | 17.6 | 11.0 | 62.5 |
| Comp. ex. 2 | 17.8 | 9.8 | 54.8 |
| Comp. ex. 3 | 16.8 | 7.3 | 43.7 |

As shown in Table 2 above, it can be seen that examples 1 to 5 have superior discharge capacity and high-rate characteristics compared to comparative examples 1 to 3. In examples 1 to 5, the ratio of ionic conductivity to electronic conductivity ($R_{IC/EC}$) falls within the range of 0.5 to 1.5, and it is confirmed that the discharge capacity and high-rate characteristics are rapidly degraded when the ratio of ionic conductivity to electronic conductivity ($R_{IC/EC}$) is outside this range. Furthermore, among examples 1 to 5, it is confirmed that the discharge capacity and high-rate characteristics of example 1, which has a ratio of ionic conductivity to electronic conductivity ($R_{IC/EC}$) close to 1, are the best.

[Description of reference numerals]

10: Positive electrode
11: Positive electrode collector
12: Positive-electrode active material layer
20: Negative electrode
21: Negative electrode collector
22: Negative-electrode active material layer
30: Sulfide-based solid electrolyte films

**Claims**

1. A positive electrode for an all-solid-state battery, comprising:

   a positive electrode active material layer,
   wherein the positive electrode active material layer comprises a positive electrode active material, a sulfide-based solid electrolyte, a conductive material, and a binder, and a ratio ($R_{IC/EC}$) of ionic conductivity (IC) to electronic conductivity (EC) of the positive electrode active material layer, as defined by a following equation 1, is 0.5 to 1.5:

$$< \text{Equation 1} >$$

$$R_{IC/EC} = \text{Ionic conductivity/Electronic conductivity}.$$

2. The positive electrode for the all-solid-state battery of claim 1, wherein the ratio of the ionic conductivity to the electronic conductivity is calculated from a Nyquist plot obtained by an Electrochemical Impedance Spectroscopy (EIS) analysis.

3. The positive electrode for the all-solid-state battery of claim 1, wherein the positive electrode active material is one or more selected from the group consisting of:

   a layered compound such as lithium cobalt oxide ($LiCoO_2$), lithium nickel oxide ($LiNiO_2$), $Li[Ni_xCo_yMn_zM_v]O_2$ (where M is one or two or more elements selected from the group consisting of: Al, Ga, and In; $0.3{\leq}x<1.0$, $0{\leq}y$, $z{\leq}0.5$, $0{\leq}v{\leq}0.1$, $x+y+z+v=1$), $Li(Li_aM_{b-a-b'}M'_{b'})O_{2-c}A_c$ (where $0{\leq}a{\leq}0.2$, $0.6{\leq}b{\leq}1$, $0<b'{\leq}0.2$, $0{\leq}c{\leq}0.2$; M includes Mn and one or more selected from the group consisting of: Ni, Co, Fe, Cr, V, Cu, Zn, and Ti; M' is one or more selected from the group consisting of: Al, Mg, and B; and A is one or more selected from the group consisting of: P, F, S, and N), or a compound thereof where a part of metal elements in the layered compound is replaced with one or more transition metals;
   lithium manganese oxides such as those represented by a formula $Li_{1+y}Mn_{2-y}O_4$ (where y is 0 to 0.33), $LiMnO_3$, $LiMn_2O_3$, and $LiMnO_2$;
   lithium copper oxide ($Li_2CuO_2$);
   vanadium oxides such as $LiV_3O_8$, $LiFe_3O_4$, $V_2O_5$, and $Cu_2V_2O_7$;
   Ni site-type lithium nickel oxides represented by a formula $LiNi_{1-y}M_yO_2$ (where M=Co, Mn, Al, Cu, Fe, Mg, B, or Ga, and y is 0.01 to 0.3);
   lithium manganese composite oxides represented by a formula $LiMn_{2-y}M_yO_2$ (where M is Co, Ni, Fe, Cr, Zn, or Ta, and y is 0.01 to 0.1) or $Li_2Mn_3MO_8$ (where M is Fe, Co, Ni, Cu, or Zn);
   formula $LiMn_2O_4$ where a part of Li in the formula is replaced with alkaline earth metal ions;
   disulfide compounds; and
   $Fe_2(MoO_4)_3$.

4. The positive electrode for the all-solid-state battery of claim 1, wherein the sulfide-based solid electrolyte comprises one or more types selected from the group consisting of: LiPSX (X = Cl, Br, or I), LiGePS, and LiPS.

5. The positive electrode for the all-solid-state battery of claim 1, wherein the sulfide-based solid electrolyte is in a form of particles having a particle diameter (D50) of 0.1 $\mu$m to 1.5 $\mu$m.

6. The positive electrode for the all-solid-state battery of claim 1, wherein the conductive material comprises one or more types selected from the group consisting of: carbon nanotube (CNT) and carbon nanofiber (CNF).

7. The positive electrode for the all-solid-state battery of claim 1, wherein the binder comprises one or more selected from the group consisting of: polytetrafluoroethylene (PTFE), polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenol resin, epoxy resin, carboxymethylcellulose, hydroxypropyl cellulose, cellulose acetate, cellulose acetate butyrate, cellulose acetate propionate, cyanoethylcellulose, cyanoethylsucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene.

8. The positive electrode for the all-solid-state battery of claim 1, wherein the positive-electrode active material layer comprises 69 to 94 wt% of the positive-electrode active material, 5 to 30 wt% of the sulfide-based solid electrolyte, 0.01 to 10 wt% of the conductive material, and 0.01 to 10 wt% of the binder.

9. The positive electrode for the all-solid-state battery of claim 1, wherein the positive-electrode active material layer comprises 80 to 90 wt% of the positive-electrode active material, 9 to 20 wt% of the sulfide-based solid electrolyte, 0.1 to 1 wt% of the conductive material, and 0.01 to 3 wt% of the binder.

10. The positive electrode for the all-solid-state battery of claim 1, wherein the positive-electrode active material is coated with an insulating material.

11. The positive electrode for the all-solid-state battery of claim 10, wherein the insulating material comprises one or more species selected from the group consisting of: an oxide and a fluoride.

12. The positive electrode for the all-solid-state battery of claim 1, wherein the conductive material is a linear conductive material.

13. The positive electrode for the all-solid-state battery of claim 1, wherein the binder is a fibrous binder.

14. An all-solid-state battery comprising the positive electrode according to claim 1, a negative electrode, and a sulfide-based solid electrolyte film interposed therebetween.

15. The all-solid-state battery of claim 14, wherein the negative electrode comprises a lithium-containing negative-electrode active material layer or an anodeless coating layer.

[FIG. 1]

11

12

11

[FIG. 2]

[FIG. 3]

## INTERNATIONAL SEARCH REPORT

| International application No. |
| --- |
| **PCT/KR2024/011956** |

### A. CLASSIFICATION OF SUBJECT MATTER

**H01M 4/131**(2010.01)i; **H01M 4/525**(2010.01)i; **H01M 4/505**(2010.01)i; **H01M 10/0562**(2010.01)i; **H01M 4/62**(2006.01)i; **H01M 10/0585**(2010.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); H01M 10/052(2010.01); H01M 10/0562(2010.01); H01M 10/058(2010.01); H01M 10/42(2006.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all solid-state battery), 양극(cathode), 황화물계 고체 전해질(sulfide-based solid electrolyte), 양극 활물질(cathode active material), 도전재(conductive material), 바인더(binder), 이온전도도(ionic conductivity), 전자전도도(electrical conductivity)

### C. DOCUMENTS CONSIDERED TO BE RELEVANT

| Category* | Citation of document, with indication, where appropriate, of the relevant passages | Relevant to claim No. |
| --- | --- | --- |
| X | KR 10-2023-0106531 A (SAMSUNG SDI CO., LTD.) 13 July 2023 (2023-07-13) See claims 1, 6 and 7; and paragraphs [0015], [0035], [0041]-[0044], [0072], [0078] and [0108]. | 1,3-9,12-15 |
| Y | | 2,10,11 |
| Y | KR 10-2022-0076320 A (TOYOTA JIDOSHA KABUSHIKI KAISHA) 08 June 2022 (2022-06-08) See claim 1; and paragraphs [0095]-[0099], [0105]-[0110] and [0129]-[0132]. | 2,10,11 |
| A | US 2019-0207253 A1 (FUJIFILM CORPORATION) 04 July 2019 (2019-07-04) See claims 1-15; and table 4. | 1-15 |
| A | US 2023-0026596 A1 (UNIVERSITY OF WASHINGTON) 26 January 2023 (2023-01-26) See claims 1-17; and paragraphs [0069] and [0070]. | 1-15 |

☑ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 November 2024** | **20 November 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/011956**

**C.** **DOCUMENTS CONSIDERED TO BE RELEVANT**

| Category* | Citation of document, with indication, where appropriate, of the relevant passages | Relevant to claim No. |
|---|---|---|
| PX | KR 10-2024-0054817 A (SAMSUNG SDI CO., LTD.) 26 April 2024 (2024-04-26) See claims 1-12; paragraphs [0064], [0121]-[0134] and [0141]; tables 1 and 2; and example 1. | 1-9,12-15 |
| E | KR 10-2024-0149661 A (HYUNDAI MOTOR COMPANY et al.) 15 October 2024 (2024-10-15) See claims 1-15; paragraphs [0032]-[0050], [0067]-[0072] and [0081]; table 1; and example 4. | 1-9,12-15 |

Form PCT/ISA/210 (second sheet) (July 2022)

## INTERNATIONAL SEARCH REPORT
### Information on patent family members

International application No.

**PCT/KR2024/011956**

| Patent document cited in search report | | | Publication date (day/month/year) | Patent family member(s) | | | Publication date (day/month/year) |
|---|---|---|---|---|---|---|---|
| KR | 10-2023-0106531 | A | 13 July 2023 | JP | 2023-100298 | A | 19 July 2023 |
| KR | 10-2022-0076320 | A | 08 June 2022 | CN | 114583245 | A | 03 June 2022 |
| | | | | CN | 114583245 | B | 02 April 2024 |
| | | | | JP | 2022-086332 | A | 09 June 2022 |
| | | | | JP | 7243704 | B2 | 22 March 2023 |
| | | | | KR | 10-2562413 | B1 | 01 August 2023 |
| | | | | US | 11961973 | B2 | 16 April 2024 |
| | | | | US | 2022-0173440 | A1 | 02 June 2022 |
| | | | | US | 2024-0222706 | A1 | 04 July 2024 |
| US | 2019-0207253 | A1 | 04 July 2019 | CN | 109690834 | A | 26 April 2019 |
| | | | | WO | 2018-047946 | A1 | 15 March 2018 |
| US | 2023-0026596 | A1 | 26 January 2023 | WO | 2021-126998 | A1 | 24 June 2021 |
| KR | 10-2024-0054817 | A | 26 April 2024 | WO | 2024-085344 | A1 | 25 April 2024 |
| KR | 10-2024-0149661 | A | 15 October 2024 | | None | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230104628
- KR 1020230147408
- KR 1020240107332
- US 10333171 B

**Non-patent literature cited in the description**

- *Journal of power sources*, 2016, vol. 316, 215-223